# EUROPÄISCHE PATENTSCHRIFT

(11) **EP 2 415 640 B1**
(45) Veröffentlichungstag und Bekanntmachung des Hinweises auf die Patenterteilung: **13.02.2013**
(21) Anmeldenummer: 10171710.6
(22) Anmeldetag: 03.08.2010
(51) Int. Cl.: B60R 1/06

(54) **Außenrückspiegel und Verfahren zu dessen Montage**
External rear view mirror and method for fitting same
Rétroviseur extérieur et son procédé de montage

(43) Veröffentlichungstag der Anmeldung: 08.02.2012
(73) Patentinhaber: SMR Patents S.à.r.l., 1653 Luxembourg (LU)
(72) Erfinder: Szmolenszki, Istvan, 71409, Schwaikheim (DE); Herrmann, Andreas, 71364, Winnenden-Baach (DE)
(74) Vertreter: Weber-Bruls, Dorothée

(56) Entgegenhaltungen:
- EP-A1- 0 620 138
- EP-A2- 0 822 120
- US-A- 5 198 929
- US-A1- 2002 130 241

## Beschreibung

Die Erfindung betrifft einen Außenrückblickspiegel einer Außenrückblickspiegelanordnung für ein Kraftfahrzeug gemäß dem Oberbegriff des Anspruchs 1.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Spiegelfuß und Grundträger können als Druckgussteile beispielsweise aus dem selben Werkstoff hergestellt sein.

Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Das Spiegelglas kann mittels einer Klebeverbindung auf der Trägerplatte montiert sein. Die Trägerplatte kann an der Verstellanordnung und/oder an der Grundplatte geführt und/oder gelagert sein. Unter dem Begriff Trägerplatte ist hierbei jegliche Art von Träger zu verstehen, der zumindest eine eben oder gewölbt ausgeführte, geschlossene oder gitterförmig unterbrochene, z.B. wabenförmige Trägerfläche aufweist, die geeignet ist, um darauf ein Spiegelglas etwa mittels einer Klebeverbindung oder durch Einklipsen z.B. hinter am Umfang der Trägerfläche hervorstehende und vom Umfang aus gesehen nach innen zur Mitte der Trägerfläche hin kragende Rastmittel zu befestigen.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Bei der Herstellung von Kraftfahrzeugteilen, wie etwa einer Außenrückblickspiegelanordnung oder einem Außenrückblickspiegel, sind eine Vielzahl gesetzlicher Vorschriften zu beachten. Eine gesetzliche Vorschrift zum Schutz beispielsweise Dritter vor Verletzungen gibt z.B. zulässige Mindestradien vor, die zumindest an ungeschützten, exponierten Stellen wenigstens eingehalten werden müssen. Diese geforderten Mindestradien können beispielsweise bei Spiegelgläsern nicht eingehalten werden. Um die gesetzliche Vorschrift dennoch zu erfüllen ist bekannt, das Spiegelglas durch einen umlaufenden Rahmen zu schützen. Der Rahmen umgrenzt die für das Spiegelglas an der Rückseite des Außenrückblickspiegelgehäuses vorgesehene Öffnung, so dass die Ränder des Spiegelglases nicht exponiert sind. Der Rahmen kann hierbei nur die Öffnung umgebende Wandungen umfassen, oder eine um die Öffnung für das Spiegelglas herumliegende Gehäusepartie mit den die Öffnung umgebenden Wandungen bilden. Die dabei einen Teil der Außenseite des Außenrückblickspiegelgehäuses bildende äußere Kontur des Rahmens hält hierbei die gesetzlich vorgegebenen Mindestradien um das Spiegelglas herum ein, ohne dass das Spiegelglas selbst unter unmittelbarer Zugänglichkeit seiner Kanten exponiert ist.

Der Außenrückblickspiegel kann zusätzlich zu oder anstelle einer elektromotorischen Betätigung für die Verstelleinrichtung des Spiegelglases eine oder mehrere weitere elektrische Komponenten beherbergen. Beispiele für solche elektrische Komponenten sind:
- eine Wiederholblinkleuchte,
- eine Einstiegsleuchte,
- ein beheizbares Spiegelglas,
- ein elektrochromatisch abblendbares Spiegelglas,
- ein Erfassungs- und/oder Warnanzeigemodul für eine Fahrassistenzvorrichtung, wie etwa eine Totwinkelüberwachung, eine Spurverlasswarnung, eine Annäherungsüberwachung, oder dergleichen,
- einen Sensor zur Erfassung von Fahr- und/oder Umgebungszuständen, wie beispielsweise Temperatur, Helligkeit, Verschmutzungsgrad, Beleuchtungssituation, beispielsweise um das Spiegelglas automatisch zu beheizen und/oder z.B. elektrochromatisch abzublenden.

Darüber hinaus kann der Außenrückblickspiegel eine oder mehrere Kombinationen der beispielhaft angeführten elektrischen Komponenten aufweisen.

Die elektrischen Komponenten im Außenrückblickspiegel sind mittels einer elektrischen Verbindung durch den Spiegelfuß hindurch mit einer kraftfahrzeugseitigen Stromversorgung und/oder mit einem kraftfahrzeugseitigen Steuergerät beispielsweise über ein Bordnetz und/oder ein Bussystem verbunden. Die elektrische Verbindung besteht beispielsweise aus einem Kabelbaum mit mehreren Kabeln, gegebenenfalls jeweils gesonderten Steckverbindungen zum elektrischen Anschluss der elektrischen Komponenten jeweils einzeln oder gruppenweise und wenigstens einer elektrischen Steckverbindung zur weiterführenden elektrischen Kontaktierung kraftfahrzeugseitig.

Beispielsweise um die Montage der verschiedenen, zumindest zum Teil im Inneren des Außenrückblickspiegelgehäuses beherbergten Bauteile, Bauteilgruppen, elektrischen Komponenten sowie gegebenenfalls deren elektrische Verbindungen untereinander und/oder mit einem kraftfahrzeugseitig untergebrachten Steuergerät zu vereinfachen, kann das Außenrückblickspiegelgehäuse zumindest zweiteilig ausgeführt sein. Ein erstes Gehäuseteil bildet beispielsweise den Gehäuseboden, ein zweites Gehäuseteil beispielsweise den Gehäusedeckel. Eines der beiden Gehäuseteile kann dabei den Rahmen mit den die Öffnung umgebenden Wandungen sowie gegebenenfalls mit der um die Öffnung für das Spiegelglas herumliegenden Gehäusepartie umfassen.

Zusammengefasst besteht ein Außenrückblickspiegel einer Außenrückblickspiegelanordnung aus mehreren miteinander verbundenen Bauteilen, beispielsweise einem ein- oder mehrteiligen z.B. aus Gehäuseboden, Gehäusedeckel und gegebenenfalls dem Rahmen bestehenden Außenrückblickspiegelgehäuse, einem darin beherbergten Grundträger, einer darauf angeordneten Verstelleinrichtung, einem Spiegelglas und eine dieses tragende und an der Verstellanordnung befestigten Trägerplatte, sowie gegebenenfalls mindestens einer beispielsweise zumindest zum Teil im Inneren des Außenrückblickspiegelgehäuses beherbergten elektrischen Komponente, beispielsweise einer elektromotorischen Betätigung für die Verstelleinrichtung.

Ein Ziel bei der Entwicklung und Herstellung von Kraftfahrzeugteilen, wie etwa einer Außenrückblickspiegelanordnung oder einem Außenrückblickspiegel, ist eine einfache, zeitsparende und kostengünstige Herstellung und Montage.

Außenrückblickspiegelanordnungen oder Außenrückblickspiegel mit Montagekonzepten, welche eine Vielzahl von jeweils zeitaufwändigen Arbeitsschritten zur Herstellung von mechanischen und/oder elektrischen Verbindungen zwischen einzelnen Bauteilen und/oder Bauteilgruppen und/oder elektrischen Komponenten vorsehen, stehen diesem Ziel entgegen.

Durch US 7,448,589 B2 ist ein Außenrückblickspiegel eines Kraftfahrzeugs bekannt. Der Außenrückblickspiegel besteht aus einem Grundträger, einem an dem Grundträger angeordneten, einteiligen Außenrückblickspiegelgehäuse mit einer rückwärtigen Öffnung für ein Spiegelglas und einem in das Außenrückblickspiegelgehäuse integrierten Rahmen mit die Öffnung umgebenden Wandungen, sowie einer auf dem Grundträger angeordneten elektromotorisch betätigten Verstelleinrichtung für eine Trägerplatte, auf der das Spiegelglas angeordnet ist. Zur Montage des Außenrückblickspiegels ist es erforderlich, zunächst den Grundträger und das Außenrückblickspiegelgehäuse miteinander zu verbinden und im Anschluss hieran die elektromotorisch betätigte Verstelleinrichtung durch die von dem Rahmen umgebene rückwärtige Öffnung am Außenrückblickspiegelgehäuse hindurch auf dem Grundträger zu befestigen.

Nachteilig hieran ist, die wegen der schlechten Zugänglichkeit aufwendige zeit- und kostenintensive Montage der Bauteile und der elektrischen Komponenten sowie deren Verbindungen untereinander durch die von dem Rahmen umgebene rückwärtige Öffnung hindurch.

Die EP 0 822 120 A2 offenbart einen gattungsgemäßen Außenrückblickspiegel, bei dem eine Lageranordnung auf einem Stützelement vorgesehen ist und einen Rahmen für einen Spiegel trägt. Rahmen samt Spiegel sind dabei über die Lageranordnung relative zum Stützelement bewegbar.

Eine Aufgabe der Erfindung ist die Schaffung eines verbesserten Außenrückblickspiegels für ein Kraftfahrzeug, welcher eine einfache und kostengünstige Herstellung und Montage zulässt.

Die Aufgabe wird gelöst durch die Merkmale des unabhängigen Anspruchs 1.

Der Gegenstand der Erfindung betrifft demnach einen Außenrückblickspiegel mit:
- einem Außenrückblickspiegelgehäuse,
- einem in dem Außenrückblickspiegelgehäuse wenigstens zum Teil beherbergten Grundträger,
- einem Rahmen mit Wandungen, welche eine auf der Rückseite des Außenrückblickspiegelgehäuses angeordnete Öffnung für ein Spiegelglas umgeben, und
- eine am Grundträger befestigte Verstelleinrichtung für eine Trägerplatte, auf der das Spiegelglas angeordnet ist.

Der Außenrückblickspiegel kennzeichnet sich dadurch aus, dass der Rahmen mit der Verstelleinrichtung verbunden ist, und zwar derart, dass sich diese Verbindung auf der dem Grundträger zugewandten Seite der Verstelleinrichtung, nämlich zwischen Verstelleinrichtung und Grundträger, befindet, während gleichzeitig der zur Einfassung des Spiegelglases vorgesehene Rahmen vermittels der Verstelleinrichtung am Grundträger befestigt ist.

Sich hierdurch ergebende Vorteile gegenüber dem Stand der Technik sind eine uneingeschränkte Zugänglichkeit der im Außenrückblickspiegelgehäuse herzustellenden elektrischen und mechanischen Verbindungen bis zur Befestigung der Verstelleinrichtung am Grundträger. Weitere Vorteile ergeben sich unter anderem dadurch, dass der Rahmen noch vor der Befestigung der Verstelleinrichtung am Grundträger einfach und leicht zugänglich gegenüber der Verstelleinrichtung ausgerichtet und gegebenenfalls an dieser fixiert und/oder befestigt werden kann.

Der Rahmen kann eine zu seiner Befestigung vermittels der Verstelleinrichtung am Grundträger vorgesehene Partie aufweisen.

Die Partie kann beispielsweise schüsselförmig ausgebildet sein, wobei der Schüsselrand die an der Rückseite des Außenrückblickspiegelgehäuses vorgesehene Öffnung umgebende Wandungen bildet. Im Bereich des Schüsselbodens ist der Rahmen vermittels der Verstelleinrichtung am Grundträger befestigt.

Die schüsselförmige Partie kann zumindest zwischen dem Schüsselrand und dem Schüsselboden gitterartig ausgestaltet sein. Dies dient sowohl einer Gewichtseinsparung, als auch einer Sichtkontrolle und/oder Montagehilfe während des Zusammenbaus des Außenrückblickspiegels, beispielsweise um zu sehen, ob die mechanischen und gegebenenfalls vorgesehenen elektrischen Verbindungen ordnungsgemäß hergestellt sind und die gegebenenfalls vorgesehenen elektrischen Verbindungen ordnungsgemäß verlaufen und beispielsweise nicht ein- und/oder abgeklemmt werden.

Die Befestigung des Rahmens am Grundträger vermittels der Verstelleinrichtung kann mittels zumindest auch für die Befestigung der Verstelleinrichtung am Grundträger vorgesehener Befestigungsmittel erfolgen.

Alternativ oder zusätzlich kann die Befestigung des Rahmens am Grundträger vermittels der Verstelleinrichtung dadurch erfolgen, dass der Rahmen von der Verstelleinrichtung selbst am Grundträger z.B. formschlüssig gehalten und/oder kraftschlüssig festgeklemmt ist, beispielsweise indem eine zur Befestigung vermittels der Verstelleinrichtung am Grundträger vorgesehene Partie des Rahmens zwischen Verstelleinrichtung und Grundträger angeordnet ist.

Hierbei kann die zur Befestigung vermittels der Verstelleinrichtung am Grundträger vorgesehene Partie des Rahmens von der an der Rückseite des Außenrückblickspiegelgehäuses vorgesehenen Öffnung für das Spiegelglas aus gesehen die Verstelleinrichtung zumindest teilweise um- und/oder hintergreifen.

In einem die Verstelleinrichtung zumindest teilweise um- und/oder hintergreifenden Teil der Partie können dabei Durchgangsöffnungen zumindest für die zur Befestigung der Verstelleinrichtung am Grundträger dienenden Befestigungsmittel vorgesehen sein, die so dass der Rahmen vermittels der Verstelleinrichtung selbst und zudem anhand der zu deren Befestigung am Grundträger vorgesehenen Befestigungsmittel am Grundträger befestigt ist.

Für eine der genannten Befestigungen und/oder zur Herstellung einer der genannten Verbindungen eignen sich beispielsweise sowohl form- und/oder kraftschlüssige Verbindungsarten, wie z.B. mittels Schrauben, Bolzen, Brechbolzen, Muttern, Nägel, Krampen, Niete, als auch stoffschlüssige Verbindungsarten, wie z.B. mittels Schweißen, Löten, Kleben.

Der Rahmen kann eine die Öffnung für das Spiegelglas umgebende Gehäusepartie bilden. Die Gehäusepartie bildet dabei zumindest einen Teil einer äußeren Kontur des Außenrückblickspiegelgehäuses.

Der Rahmen kann ein die Öffnung für das Spiegelglas aufweisendes Gehäuseteil eines zumindest zweiteiligen Außenrückblickspiegelgehäuses bilden oder umfassen oder von einem solchen Gehäuseteil gebildet oder umfasst werden.

Das Außenrückblickspiegelgehäuse kann hierbei wenigstens aus einem ersten Gehäuseteil und einem zweiten Gehäuseteil bestehen, welche beide mit dem gegebenenfalls vorgesehenen Grundträger verbunden sein können. Eines der beiden Gehäuseteile kann eine um die Öffnung für das Spiegelglas herumliegenden Gehäusepartie sowie gegebenenfalls den Rahmen mit den die Öffnung umgebenden Wandungen umfassen. Das erste Gehäuseteil und das zweite Gehäuseteil grenzen entlang mindestens eines Verbindungsstoßes aneinander an. Wenigstens das den Rahmen mit den die Öffnung umgebenden Wandungen sowie gegebenenfalls die um die Öffnung für das Spiegelglas herumliegende Gehäusepartie umfassende Gehäuseteil ist beispielsweise mittels einer Schraubverbindung vermittels der Verstelleinrichtung am Grundträger befestigt.

Wichtig ist hervorzuheben, dass alternativ oder zusätzlich zu einer Schraubverbindung jegliche andere Kraft und/oder Form und/oder stoffschlüssige Verbindungsmethode, wie z.B. gegebenenfalls verklebte oder verschweißte Rast-, Niet- oder kombinierte Steck-Schraub- oder Rast-Schraubverbindungen hierfür in Frage kommen. Eine beispielsweise hierfür für sich oder in Kombination mit einer anderen Verbindungsmethode geeignete, auch als Klipsverbindung oder als Schnappverbindungen bezeichnete Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind eine Hintergreifung und ein in diese eingreifendes elastisch verformbares Rastmittel.

Der Gegenstand der Erfindung ermöglicht ein vorteilhaftes Verfahren zur Montage eines Außenrückblickspiegels für ein Kraftfahrzeug.

Dabei werden zunächst der zur Einfassung des Spiegelglases vorgesehene Rahmen und die Verstelleinrichtung zueinander ausgerichtet sowie gegebenenfalls miteinander verbunden, um anschließend der Rahmen vermittels der Verstelleinrichtung am Grundträger zu befestigten.

Das Verfahren erlaubt die Vorteile eines zuvor beschriebenen Außenrückblickspiegels bei dessen Montage zu nutzen. Ausgestaltungen des Verfahrens ergeben sich durch die zuvor beschriebenen verschiedenen Ausgestaltungsmöglichkeiten des Außenrückblickspiegels und dessen Bauteile, Bauteilgruppen sowie gegebenenfalls vorgesehenen elektrischen Komponenten.

Weitere Merkmale der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Es zeigen in schematischer Darstellung:
- Figur 1: eine Ansicht eines erfindungsgemäßen Außenrückblickspiegels von dessen Rückseite her bei abgenommener, ein Spiegelglas tragender Trägerplatte.
- Figur 2: eine Explosionsdarstellung einer Befestigung eines eine auf der Rückseite des Außenrückblickspiegels aus Fig. 1 vorgesehene Öffnung für ein Spiegelglas umgebenden Rahmens vermittels einer Verstelleinrichtung an einem Grundträger in perspektivische Ansicht.
- Figur 3: ein Ablaufdiagramm eines Verfahrens zur Montage der in Fig. 2 dargestellten Befestigung des die auf der Rückseite des Außenrückblickspiegels aus Fig. 1 vorgesehene Öffnung für das Spiegelglas umgebenden Rahmens vermittels der Verstelleinrichtung am Grundträger.

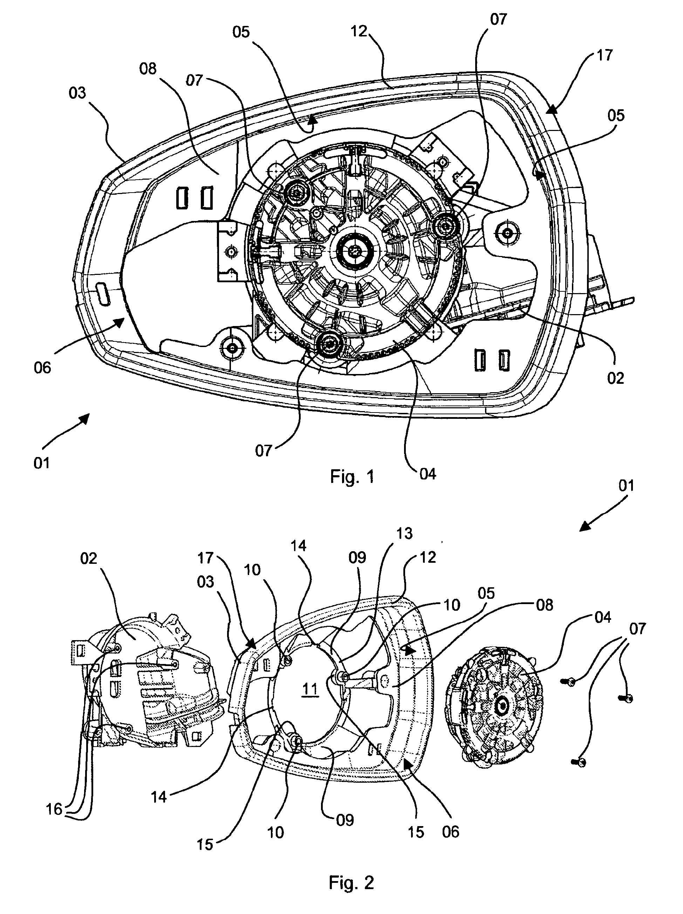

Ein in den Fig. 1 und 2 zum Teil dargestellter Außenrückblickspiegel 01 einer Außenrückblickspiegelanordnung für ein Kraftfahrzeug umfasst im Wesentlichen ein der Übersichtlichkeit halber nicht näher dargestelltes Außenrückblickspiegelgehäuse, einen in dem Außenrückblickspiegelgehäuse wenigstens zum Teil beherbergten Grundträger 02, einem Rahmen 03 und eine am Grundträger 02 befestigte Verstelleinrichtung 04 für ein Spiegelglas. Die Verstelleinrichtung 04 verfügt bevorzugt über eine elektromotorische Betätigung. Eine solche Verstelleinrichtung 04 kann daher auch als Aktuator für das Spiegelglas bezeichnet werden.

Der Rahmen 03 verfügt über Wandungen 05, welche eine auf der Rückseite des Außenrückblickspiegelgehäuses angeordnete Öffnung 06 für ein Spiegelglas umgeben.

Der Rahmen 03 dient der Einfassung des Spiegelglases. Der Rahmen 03 ermöglicht eine gesetzliche Vorschrift zum Schutz beispielsweise Dritter vor Verletzungen zu erfüllen, welche zulässige Mindestradien vorgibt, die zumindest an ungeschützten, exponierten Stellen wenigstens eingehalten werden müssen. Der Rahmen 03 schützt die Kanten an den Rändern des Spiegelglases, so dass diese nicht exponiert sind. Dies ist notwendig, da die von der gesetzlichen Vorschrift geforderten Mindestradien bei Spiegelgläsern nicht eingehalten werden können.

Die Verstelleinrichtung wirkt auf eine Trägerplatte ein, auf deren der Öffnung 06 auf der Rückseite des Außenrückblickspiegels 01 zugewandten Seite das Spiegelglas angeordnet ist.

Der Rahmen 03 ist vermittels der Verstelleinrichtung 04 am Grundträger 02 befestigt.

Die Befestigung des Rahmens 03 am Grundträger 02 vermittels der Verstelleinrichtung 04 erfolgt mittels zumindest auch für die Befestigung der Verstelleinrichtung 04 am Grundträger 02 vorgesehener Befestigungsmittel 07. Bei den Befestigungsmitteln 07 kann es sich beispielsweise um Schrauben handeln.

Der Rahmen 03 kann eine zu seiner Befestigung vermittels der Verstelleinrichtung 04 am Grundträger 02 vorgesehene Partie 08 aufweisen. Von der an der Rückseite des Außenrückblickspiegelgehäuses vorgesehenen Öffnung 06 für das Spiegelglas aus gesehen umgreift und/oder hintergreift die Partie 08 die Verstelleinrichtung 04 zumindest teilweise.

In einem die Verstelleinrichtung 04 zumindest teilweise um- und/oder hintergreifenden Teil 09 der Partie 08 können Durchgangsöffnungen 10 für die zur Befestigung der Verstelleinrichtung 04 am Grundträger 02 dienenden Befestigungsmittel 07 vorgesehen sein. Darüber hinaus kann in dem die Verstelleinrichtung 04 zumindest teilweise um- und/oder hintergreifenden Teil 09 der Partie 08 mindestens eine Durchgangsöffnung 11 für wenigstens eine mit dem Grundträger 02 zur Anlage kommende Fläche der Verstelleinrichtung 04 vorgesehen sein.

Vorzugsweise ist die Partie 08 schüsselförmig ausgebildet. Der Schüsselrand 12 bildet oder umfasst die an der Rückseite des Außenrückblickspiegelgehäuses vorgesehene Öffnung 06 umgebenden Wandungen 05. Im Bereich des Schüsselbodens 13 ist der Rahmen 03 vermittels der Verstelleinrichtung 04 am Grundträger 02 befestigt.

Die schüsselförmige Partie 08 kann dabei zumindest zwischen dem Schüsselrand 12 und dem Schüsselboden 13 gitterartig ausgestaltet sein.

Der Rahmen 03 ist zu seiner Befestigung am Grundträger 02 vermittels der Verstelleinrichtung 04 von der Verstelleinrichtung 04 selbst gehalten und kann ggf. am Grundträger 02 formschlüssig gehalten und/oder kraftschlüssig festgeklemmt werden. Beispielsweise für eine verdrehsichere formschlüssige Halterung können beispielsweise Aussparungen 14 und/oder Vorsprünge 15 am Rahmen 03 und zugehörige Vorsprünge und/oder Aussparungen an der Verstelleinrichtung 04 vorgesehen sein. Beispielsweise können mehrere Aussparungen 14 und Vorsprünge 15 am Schüsselboden 13 z.B. gleichmäßig über den Umfang verteilt um die Durchgangsöffnung 11 herum liegend vorgesehen sein. Die Verstelleinrichtung weist an ihrer durch die Durchgangsöffnung 11 hindurch mit dem Grundträger 02 in Kontakt stehenden Fläche mit den Aussparungen 14 und Vorsprüngen 15 korrespondierende Flächenabschnitte auf.

Am Grundträger 02 sind Aufnahmen 16 für die Befestigungsmittel 07 vorgesehen. Die Aufnahmen können beispielsweise als Öffnungen oder Bohrungen, z.B. in Form von Sacklöchern ausgebildet sein, in welche als z.B. Blechschrauben ausgeführte Befestigungsmittel eingeschraubt sind. Alternativ können die Öffnungen der Aufnahmen 16 mit einem Innengewinde versehen sein, in welches als Gewindeschrauben ausgeführte Befestigungsmittel 07 eingeschraubt sein können. Die Aufnahmen können dabei die äußere Gestalt von auf dem Grundträger aufstehenden Domen aufweisen, welche mit jeweils einer entlang ihrer Achse verlaufenden, gegebenenfalls mit einem Innengewinde versehenen Bohrung ausgestattet sind.

Wichtig ist hervorzuheben, dass die Aufnahmen 16 und die Befestigungsmittel 07 auch umgekehrt wie zuvor beschrieben ausgestaltet sein können. Im vorliegenden Ausführungsbeispiel bedeutet dies, dass die Aufnahmen 16 z.B. mit Gewindestangen versehen sein können, welche durch die Durchgangsöffnungen 10 im Schüsselboden 13 der Partie 08 des Rahmens 03 und durch die Verstelleinrichtung 04 hindurchragen, und die Befestigungsmittel 07 z.B. als Muttern ausgebildet sind.

Ebenso wichtig ist hervorzuheben, dass der Rahmen 03 unabhängig von der Befestigung vermittels der Verstelleinrichtung 04 am Grundträger 02 gesondert mit der Verstelleinrichtung 04 verbunden sein kann. Hierzu können z.B. eine oder mehrerer Verbindungen, z.B. eine oder mehrere Rast- und/oder Schraubverbindungen zwischen Rahmen 03 und Verstelleinrichtung 04 vorgesehen sein. Der Rahmen 03 ist hierbei mit der Verstelleinrichtung 04 auf der dem Grundträger 02 zugewandten Seite der Verstelleinrichtung 04 verbunden, nämlich zwischen Verstelleinrichtung und Grundträger.

Der Rahmen 03 kann eine die Öffnung 06 für das Spiegelglas umgebende Gehäusepartie bilden. Die Gehäusepartie bildet hierbei zumindest einen Teil 17 einer äußeren Kontur des Außenrückblickspiegelgehäuses.

Der Rahmen 03 kann zur Steigerung der Stabilität des Außenrückblickspiegels 01 im Anschluss an die Befestigung vermittels der Verstelleinrichtung 04 am Grundträger 02 zusätzlich mittels eigens hierfür vorgesehenen Befestigungsmitteln mit dem Grundträger 02 verbunden sein.

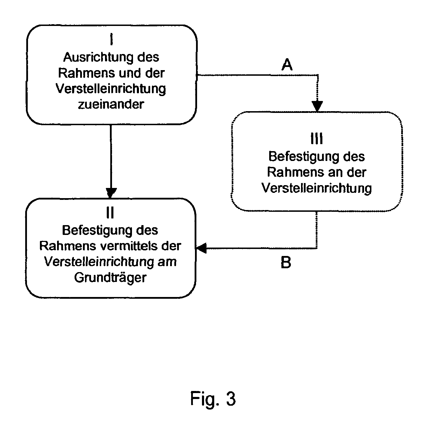

Ein in Fig. 3 schematisch in seinem Ablauf dargestelltes Verfahren zur Montage eines Außenrückblickspiegels 01 mit:
- einem Außenrückblickspiegelgehäuse,
- einem in dem Außenrückblickspiegelgehäuse wenigstens zum Teil beherbergten Grundträger 02,
- einem Rahmen 03 mit Wandungen 05, welche eine auf der Rückseite des Außenrückblickspiegelgehäuses angeordnete Öffnung 06 für ein Spiegelglas umgeben und
- eine am Grundträger 02 befestigte Verstelleinrichtung 04 für eine Trägerplatte, auf der das Spiegelglas angeordnet ist,
besteht zumindest in einer Grundform im Wesentlichen aus zwei Verfahrensschritten I, II.

Das Verfahren startet in einem ersten Verfahrensschritt I mit einer Ausrichtung des Rahmens 03 und der Verstelleinrichtung 04 zueinander. Bei der Ausrichtung zueinander sind sowohl der Rahmen 03, als auch die Verstelleinrichtung 04 bevorzugt mit keinem anderen Bauteil oder keiner anderen Bauteilgruppe des Außenrückblickspiegels verbunden, so dass sowohl mit dem Rahmen 03, als auch mit der Verstelleinrichtung 04 frei umgegangen werden kann.

In einem zweiten Verfahrensschritt II sieht das Verfahren eine Befestigung des Rahmens 03 vermittels der Verstelleinrichtung 04 am Grundträger 02 vor. Hierzu wird der zuvor zu der Verstelleinrichtung 04 ausgerichtete Rahmen 03 dadurch am Grundträger 02 befestigt, indem die Verstelleinrichtung 04 am Grundträger befestigt wird. Hierdurch wird ein gesonderter Arbeitsschritt einer separaten Befestigung des Rahmens 03 am Grundträger 02 eingespart. Ein solcher nach dem Stand der Technik erforderlicher separater Arbeitsschritt zur Befestigung einer Verstelleinrichtung am Grundträger, nachdem bereits der Rahmen am Grundträger montiert wurde, ist zudem kompliziert ausführbar, da die Zugänglichkeit durch den Rahmen stark eingeschränkt ist.

In einer durch die gestrichelten Pfeile A und B angedeuteten alternativen Ausgestaltung des Verfahrens findet nach dem ersten Verfahrensschritt I und vor dem zweiten Verfahrensschritt II sein dritter Verfahrensschritt III statt. Dieser dritte Verfahrensschritt III sieht vor, dass der Rahmen 03 vor der Befestigung vermittels der Verstelleinrichtung 04 am Grundträger an der Verstelleinrichtung 04 befestigt wird. Hierbei sind Verstelleinrichtung 04 und Rahmen 03 allseitig frei zugänglich, so dass ein solcher zusätzlicher Verfahrensschritt leicht ausführbar ist und in jedem Fall eine Einsparung gegenüber einer nach dem Stand der Technik nur unter hohem Zeitaufwand durchführbaren Befestigung der Verstelleinrichtung 04 am Grundträger, nachdem bereits der Rahmen am Grundträger befestigt worden ist.

Vorteile der Erfindung ergeben sich unter anderem dadurch, dass gegenwärtig beim Stand der Technik zunächst meist in einem ersten Arbeitsschritt der Rahmen mittels gesonderter Schrauben am Grundträger befestigt werden muss, bevor in weiteren Schritten z.B. elektrische und/oder mechanische Verbindungen im nunmehr nur schlecht durch den Rahmen begrenzt zugänglichen Inneren des Außenrückblickspiegels hergestellt werden müssen. In einem getrennten Arbeitsschritt muss beim Stand der Technik dann noch die Verstelleinrichtung mittels gesonderter Befestigungsmittel, z.B. ebenfalls Schrauben, ebenfalls am Grundträger befestigt werden.

Die vorliegende Erfindung ermöglicht entweder die Einsparung oder die vereinfachte Ausführung eines Arbeitsschritts, da nunmehr der Rahmen 03 vermittels der Verstelleinrichtung 04 am Grundträger 02 befestigt wird.

Die Erfindung ist insbesondere im Bereich der Herstellung von Außenrückblickspiegelanordnungen für Kraftfahrzeuge gewerblich anwendbar.

## Patentansprüche

1. Außenrückblickspiegel (01) mit
- einem Außenrückblickspiegelgehäuse,
- einem in dem Außenrückblickspiegelgehäuse wenigstens zum Teil beherbergten Grundträger (02),
- einem Rahmen (03) mit Wandungen (05), welche eine auf der Rückseite des Außenrückblickspiegelgehäuses angeordnete Öffnung (06) für ein Spiegelglas umgeben, und
- eine am Grundträger (02) befestigte Verstelleinrichtung (04) für das Spiegelglas,
**dadurch gekennzeichnet, dass**
der Rahmen (03) mit der Verstelleinrichtung (04) zwischen Verstelleinrichtung (04) und Grundträger (02) verbunden und vermittels der Verstelleinrichtung (04) am Grundträger (02) befestigt ist.

2. Außenrückblickspiegel nach Anspruch 1,
**gekennzeichnet durch**
eine Befestigung des Rahmens (03) am Grundträger (02) vermittels der Verstelleinrichtung (04) mittels zumindest auch für die Befestigung der Verstelleinrichtung (04) am Grundträger (02) vorgesehener Befestigungsmittel (07).

3. Außenrückblickspiegel nach Anspruch 1 oder 2,
**dadurch gekennzeichnet, dass**
zur Befestigung des Rahmens (03) am Grundträger (02) vermittels der Verstelleinrichtung (04) der Rahmen (03) von der Verstelleinrichtung (04) selbst am Grundträger (04) formschlüssig gehalten (14, 15) und/oder kraftschlüssig festgeklemmt ist.

4. Außenrückblickspiegel nach einem der vorhergehenden Ansprüche, **dadurch**
**gekennzeichnet, dass**
der Rahmen (03) eine zu seiner Befestigung vermittels der Verstelleinrichtung (04) am Grundträger (02) vorgesehene Partie (08) aufweist.

5. Außenrückblickspiegel nach Anspruch 4,
**dadurch gekennzeichnet, dass**
die zur Befestigung vermittels der Verstelleinrichtung (04) am Grundträger (02) vorgesehene Partie (08) des Rahmens (03) von der an der Rückseite des Außenrückblickspiegelgehäuses vorgesehenen Öffnung (06) für das Spiegelglas aus gesehen die Verstelleinrichtung (04) zumindest teilweise umgreift und/oder hintergreift.

6. Außenrückblickspiegel nach Anspruch 5,
**dadurch gekennzeichnet, dass**
in einem die Verstelleinrichtung (04) zumindest teilweise um- und/oder hintergreifenden Teil (09) der Partie (08) Durchgangsöffnungen (10, 11) zumindest für die zur Befestigung der Verstelleinrichtung (04) am Grundträger (02) dienenden Befestigungsmittel (07) vorgesehen sind.

7. Außenrückblickspiegel nach Anspruch 4, 5 oder 6,
**dadurch gekennzeichnet, dass**
die Partie (08) schüsselförmig ausgebildet ist, wobei der Schüsselrand die an der Rückseite des Außenrückblickspiegelgehäuses vorgesehene Öffnung umgebende Wandungen bildet und im Bereich des Schüsselbodens der Rahmen vermittels der Verstelleinrichtung am Grundträger befestigt ist.

8. Außenrückblickspiegel nach Anspruch 7,
**dadurch gekennzeichnet, dass**
die schüsselförmige Partie (08) zumindest zwischen dem Schüsselrand (12) und dem Schüsselboden (13) gitterartig ausgestaltet ist.

9. Außenrückblickspiegel nach einem der vorhergehenden Ansprüche, **dadurch**
**gekennzeichnet, dass**
der Rahmen (03) eine die Öffnung (06) für das Spiegelglas umgebende Gehäusepartie bildet.

10. Außenrückblickspiegel nach Anspruch 9,
**dadurch gekennzeichnet, dass**
die Gehäusepartie zumindest einen Teil (17) einer äußeren Kontur des Außenrückblickspiegelgehäuses bildet.

11. Außenrückblickspiegel nach einem der vorhergehenden Ansprüche, **dadurch gekennzeichnet, dass**
der Rahmen (03) ein die Öffnung (06) für das Spiegelglas aufweisendes Gehäuseteil eines zumindest zweiteiligen Außenrückblickspiegelgehäuses bildet oder umfasst oder von einem solchen Gehäuseteil gebildet oder umfasst wird.

## Claims

1. An external rear view mirror (01) having
- an external rear view mirror housing;
- a base support (02) that is at least partially accommodated in the external rear view mirror housing;
- a frame (03) having walls (05) that surround an opening (06) for a mirror glass, said opening being arranged on the back of the external rear view mirror housing; and
- an adjusting device (04) for the mirror glass, said adjusting device being attached to the base support (02),
**characterized in that**
the frame (03) is connected to the adjusting device (04) between the adjusting device (04) and the base support (02) and attached to the base support (02) by means of the adjusting device (04).

2. The external rear view mirror according to claim 1,
**characterized by**
an attachment of the frame (03) to the base support (02) by means of the adjusting device (04) by means of attaching means (07) that are provided at least also for attaching the adjusting device (04) to the base support (02).

3. The external rear view mirror according to claim 1 or 2,
**characterized in that**
for attaching the frame (03) to the base support (02) by means of the adjusting device (04), the adjusting device (04) itself holds the frame (03) on the base support (02) by means of a positive-locking connection (14, 15) and/or clamps the frame (03) on the base support (02) by means of a non-positive connection.

4. The external rear view mirror according to any one of the preceding claims,
**characterized in that**
the frame (03) has a part (08) that is provided for attaching the frame (03) to the base support (02) by means of the adjusting device (04).

5. The external rear view mirror according to claim 4,
**characterized in that**
the part (08) of the frame (03) provided for attachment to the base support (02) by means of the adjusting device (04) at least partially encompasses and/or reaches behind the adjusting device (04) as viewed from the opening (06) for the mirror glass, said opening (06) being provided on the back of the external rear view mirror housing.

6. The external rear view mirror according to claim 5,
**characterized in that**
through openings (10, 11) at least for the attaching means (07) serving to attach the adjusting device (04) to the base support (02) are provided in a section (09) of the part (08), said section at least partially encompassing and/or reaching behind the adjusting device (04).

7. The external rear view mirror according to claim 4, 5 or 6,
**characterized in that**
the part (08) is dish-shaped, wherein the dish edge forms walls that surround the opening that is provided on the back of the external rear view mirror housing and the frame is attached, in the region of the dish bottom, to the base support by means of the adjusting device.

8. The external rear view mirror according to claim 7,
**characterized in that**
the dish-shaped part (08) is lattice-like at least between the dish edge (12) and the dish bottom (13).

9. The external rear view mirror according to any one of the preceding claims,
**characterized in that**
the frame (03) forms a housing part that surrounds the opening (06) for the mirror glass.

10. The external rear view mirror according to claim 9,
**characterized in that**
the housing part forms at least a part (17) of an outer contour of the external-rear-view-mirror housing.

11. The external rear view mirror according to any one of the preceding claims,
**characterized in that**
the frame (03) forms or comprises a housing part of an at least two-piece external rear view mirror housing or is formed or comprised by such a housing part, said housing part having the opening (06) for the mirror glass.

## Revendications

1. Rétroviseur extérieur (01), comportant
- un boîtier de rétroviseur extérieur,
- un support de base (02), reçu au moins partiellement dans le boîtier de rétroviseur extérieur,
- un cadre (03) muni de parois (05), délimitant une ouverture (06) agencée sur le côté arrière du boîtier de rétroviseur extérieur, et destinée à un miroir, et
- un dispositif d'ajustement (04) fixé sur le support de base (02), et destiné au miroir,
**caractérisé en ce que**
le cadre (03) est relié au dispositif d'ajustement (04) entre le dispositif d'ajustement (04) et le support de base (02), et est fixé sur le support de base (02) au moyen du dispositif d'ajustement (04).

2. Rétroviseur extérieur selon la revendication 1, **caractérisé par** une fixation du cadre (03) sur le support de base (02) au moyen du dispositif d'ajustement (04), par l'intermédiaire de moyens de fixation (07) prévus au moins également pour la fixation du dispositif d'ajustement (04) sur le support de base (02).

3. Rétroviseur extérieur selon la revendication 1 ou 2, **caractérisé en ce que**
pour la fixation du cadre (03) sur le support de base (02) au moyen du dispositif d'ajustement (04), le cadre (03) est maintenu de manière serrée sur le support de base (02) lui-même par le dispositif d'ajustement (04), et/ou est immobilisé d'une manière bloquée par frottement.

4. Rétroviseur extérieur selon l'une quelconque des revendications précédentes,
**caractérisé en ce que**
le cadre (03) comporte un tronçon (08) prévu pour sa fixation au moyen du dispositif d'ajustement (04) sur le support de base (02).

5. Rétroviseur extérieur selon la revendication 4, **caractérisé en ce que**
le tronçon (08) du cadre (03) prévu pour une fixation au moyen du dispositif d'ajustement (04) sur le support de base (02), en regardant depuis l'ouverture (06) prévue sur le côté arrière du boîtier de rétroviseur et destinée au miroir, saisit au moins partiellement le dispositif d'ajustement (04), et/ou vient en prise derrière celui-ci.

6. Rétroviseur extérieur selon la revendication 5, **caractérisé en ce que**
dans une partie (09) du tronçon (08) saisissant au moins partiellement et/ou venant en prise derrière le dispositif d'ajustement (04), des ouvertures traversantes (10,11) sont fournies, au moins pour les moyens de fixation (07) servant à la fixation du dispositif d'justement (04) sur le support de base (02).

7. Rétroviseur extérieur selon la revendication 4, 5 ou 6, **caractérisé en ce que**
le tronçon (08) est conçu sous la forme d'une cuvette, de sorte que le bord de cuvette forme des parois entourant l'ouverture agencée sur le côté arrière du boîtier de rétroviseur extérieur, et dans la zone de la base de cuvette, le cadre est fixé sur le support de base par l'intermédiaire du dispositif d'ajustement.

8. Rétroviseur extérieur selon la revendication 7, **caractérisé en ce que**
le tronçon en forme de cuvette (08) peut avoir une forme de treillis, au moins entre le bord de cuvette (12) et la base de cuvette (13).

9. Rétroviseur extérieur selon l'une quelconque des revendications précédentes,
**caractérisé en ce que**
le cadre (03) forme un tronçon de réception entourant l'ouverture (06) destinée au miroir.

10. Rétroviseur extérieur selon la revendication 9, **caractérisé en ce que**
le tronçon de réception forme au moins une partie (17) d'un contour extérieur du boîtier de rétroviseur extérieur.

11. Rétroviseur extérieur selon l'une quelconque des revendications précédentes,
**caractérisé en ce que**
le cadre (03) peut former ou comporter une partie de réception, comprenant l'ouverture (06) pour le miroir de rétroviseur, d'un boîtier de rétroviseur extérieur formé en au moins deux parties, ou peut-être formé ou compris par une telle partie de réception.
